# EUROPÄISCHE PATENTSCHRIFT

(11) **EP 3 634 829 B1**
(45) Veröffentlichungstag und Bekanntmachung des Hinweises auf die Patenterteilung: **05.10.2022**
(21) Anmeldenummer: 18739799.7
(22) Anmeldetag: 03.07.2018
(51) Int. Cl.: B61L 15/00, B61L 3/00, B60L 15/20

(54) **VERFAHREN UND ANORDNUNG ZUR ÜBERWACHUNG EINES ANTRIEBSSYSTEMS EINES SPURGEBUNDENEN FAHRZEUGS**
METHOD AND DEVICE FOR MONITORING A DRIVE OF A DRIVE SYSTEM OF A TRACK-BOUND VEHICLE
PROCÉDÉ ET DISPOSITIF DE SURVEILLANCE D'UN SYSTÈME D'ENTRAÎNEMENT D'UN VÉHICULE GUIDÉ

(30) Priorität: 31.07.2017 DE 102017213186
(43) Veröffentlichungstag der Anmeldung: 15.04.2020
(73) Patentinhaber: Siemens Mobility GmbH, 81739 München (DE)
(72) Erfinder: STINGL, Bernhard Andreas, 47803 Krefeld (DE); WENNEKAMP, Fabian, 45131 Essen (DE)
(86) Internationale Anmeldenummer: PCT/EP2018/067902
(87) Internationale Veröffentlichungsnummer: WO 2019/025104

(56) Entgegenhaltungen:
- WO-A1-2004/024531
- WO-A1-2015/128233
- US-A1- 2015 191 183
- US-A1- 2016 236 698

## Beschreibung

Die Erfindung betrifft ein Verfahren zum Überwachen eines Antriebssystems eines spurgebundenen Fahrzeugs mit einer Mehrzahl Antriebssträngen. Die Erfindung betrifft ebenfalls eine Anordnung zur Überwachung eines Antriebssystems eines spurgebundenen Fahrzeugs, welche das erfindungsgemäße Verfahren verwirklicht.

In elektrisch angetriebenen Schienenfahrzeugen mit einer Mehrzahl von Antriebssträngen, insbesondere in elektrischen Triebzügen, existiert ein Bedarf an Informationen bezüglich des Status bzw. des Zustands einzelner Komponenten des jeweiligen Antriebsstrangs. Beispielsweise wird eine Drehzahl des jeweiligen Radsatzes bzw. der den Radsatz treibenden Radsatzwelle erfasst, welche einerseits der Steuerung des Antriebssystems bzw. der einzelnen Antriebsstränge, andererseits weiteren sicherheitsrelevanten Systemen wie beispielsweise dem Gleitschutz bzw. Schleuderschutz oder der Bremssteuerung des Schienenfahrzeugs dienen. Weiterhin kann anhand der erfassten Drehzahlen auf einen Zustand der jeweiligen Antriebsstränge geschlossen werden, welcher beispielsweise für die zeitliche Planung der Wartung oder eines Austausches von Komponenten der Antriebsstränge verwendet werden kann.

Die Anforderungen an die Genauigkeit und Zuverlässigkeit der Erfassung der Drehzahl von Radsätzen ist dabei speziell bei Schienenfahrzeugen für den Hochgeschwindigkeitsbereich besonders hoch, was zu einem hohen baulichen Aufwand insbesondere in den Drehgestellen des Schienenfahrzeugs führt. Gleichzeitig existieren jedoch Anforderungen an das Fahrwerk eines Schienenfahrzeugs, insbesondere eine Verringerung des Gewichts der Drehgestelle sowie deren erforderlichen Bauraumes, um beispielsweise höhere mögliche Endgeschwindigkeiten sowie einen geringeren Energieverbrauch des Schienenfahrzeugs verwirklichen zu können. Drehgestelle als Teil des Fahrwerks eines Schienenfahrzeugs dienen bekanntermaßen sowohl der Aufnahme von in der Regel einem oder zwei Radsätzen mit einer jeweiligen Radsatzwelle sowie daran angeordneten Rädern bzw. Radscheiben sowie, sofern es sich um Triebdrehgestelle handelt, Komponenten des Antriebsstrangs, als auch dem Abstützen der ein oder mehreren Wagenkästen des Schienenfahrzeugs gegenüber Gleisen, auf denen sich das Schienenfahrzeug fortbewegt.

Eine Erfassung der Drehzahl eines Radsatzes erfolgt dabei insbesondere mittels direkt am Radsatz bzw. an der Radsatzwelle oder in dessen bzw. deren unmittelbaren Umgebung im Drehgestell angeordneten Drehzahlsensoren. Mit einer Verringerung der Ausmaße eines Drehgestells zur Verringerung des erforderlichen Bauraumes für dessen Anordnung am Wagenkasten des Schienenfahrzeugs verringert sich jedoch auch der zur Verfügung stehende Raum für die Anordnung von Drehzahlsensoren im Bereich der Radsätze bzw. der Radsatzwellen. Es existieren daher Bestrebungen, alternative Möglichkeiten der Erfassung der Drehzahl eines Radsatzes zu finden.

Eine Möglichkeit besteht in einer indirekten Erfassung mittels einer Erfassung der Drehzahl einer Welle einer mechanisch mit dem Radsatz verbundenen Komponente des Antriebsstrangs. Ist der Radsatz beispielsweise über eine Kupplung sowie gegebenenfalls ein Getriebe mit dem Fahrmotor mechanisch verbunden, so kann aus der Erfassung der Drehzahl einer Welle einer dieser Komponenten mittels eines Drehzahlsensors auf die Drehzahl des Radsatzes geschlossen werden, wobei bei Einsatz eines Getriebes für die Bestimmung der Drehzahl des zugehörigen Radsatzes ein Übersetzungsverhältnis des Getriebes entsprechend zu berücksichtigen ist.

Sofern jedoch eine Beschädigung einer dieser Komponenten des Antriebsstrangs auftritt, ist dieser Rückschluss gegebenenfalls nicht mehr direkt möglich. Insbesondere bei elektrisch angetriebenen Schienenfahrzeugen mit einer Mehrzahl Antriebssträngen ist das Auftreten eines Bruchs bzw. einer Beschädigung der Kupplung eines Antriebsstrangs, in dessen Folge der betroffene Radsatz nicht mehr angetrieben wird, nicht umgehend zu erkennen. Dies ist dadurch bedingt, dass einerseits der Wegfall eines Teils der Antriebsleistung zumindest teilweise von den weiteren, unbeschädigten Antriebssträngen ausgeglichen wird, andererseits durch den erzwungenen Mitlauf des nicht mehr angetriebenen Radsatzes die Wellen sowohl des Getriebes als auch der dem Getriebe zugewandten Seite der Kupplung sich weiterhin mit einer Drehzahl drehen, die weitgehend den Drehzahlen der entsprechenden Komponenten anderer Antriebsstränge entsprechen. Auch wird sich beispielsweise bei Einsatz von Asynchronmotoren als Fahrmotoren die Drehzahl des Fahrmotors nach einer plötzlichen Entlastung aufgrund einer Beschädigung der Kupplung nicht auf null verringern, sondern in einen Leerlauf einpendeln, in dem die Drehzahl der Antriebswelle nahezu der Drehzahl des Drehfeldes entspricht.

Eine indirekte Erfassung der Drehzahl eines Radsatzes ist somit generell möglich, jedoch nachteilig mit einer bestimmten Fehlerwahrscheinlichkeit behaftet, wodurch sie insbesondere für sicherheitsrelevante Systeme nur begrenzt geeignet erscheint.

Aus dem Dokument US 2016/236698 A1 ist ein System bekannt, mittels welchem ein durchdrehendes Ritzel eines Traktionsmotors einer Lokomotive anhand von Signalen eines Drehzahlsensors sowie einer Stromrückkopplung des Traktionsmotors ermittelbar ist. Aus dem Dokument WO 2004/024531 A1 ist ein System bekannt, mittels welchem ein Zustand von Systemen, Untersystemen und Komponenten eines Schienenfahrzeugs überwacht werden können, wobei insbesondere der Zustand eines Motors anhand von Messungen von Motorströmen mittels mehrerer Sensoren erfasst werden kann. Aufgabe der vorliegenden Erfindung ist es, ein Verfahren sowie eine zugehörige Anordnung anzugeben, die das Erkennen von Situationen, in denen die indirekte Erfassung der Drehzahl eines Radsatzes nicht mit der erforderlichen Verlässlichkeit möglich ist, ermöglicht. Diese Aufgabe wird durch die Merkmale der unabhängigen Patentansprüche 1 und 9 gelöst.

Weitergehende Ausgestaltungen der Erfindung sind in jeweils abhängigen Patentansprüchen definiert.

Ein erster Aspekt der Erfindung betrifft ein Verfahren zum Überwachen eines Antriebssystems eines spurgebundenen Fahrzeugs. Dabei weist das Antriebssystem zumindest zwei Antriebsstränge mit jeweils einem elektrischen Fahrmotor und einem Radsatz, sowie eine Steuereinrichtung auf. Das erfindungsgemäße Verfahren umfasst zumindest die Schritte des Bestimmens einer jeweiligen über ein Zeitintervall oder eine Strecke den zumindest zwei Fahrmotoren zugeführten und/oder von den zumindest zwei Fahrmotoren abgegebenen elektrischen Energie, des Vergleichens der bestimmten jeweiligen elektrischen Energie der zumindest zwei Fahrmotoren mit einem Energie-Schwellwert, und des Ableitens eines Zustands des jeweiligen Antriebsstrangs aus dem Vergleich.

Erfindungsgemäß wird der abgeleitete Zustand des jeweiligen Antriebsstrangs nachfolgend während des Fahrbetriebs dadurch geprüft, dass der jeweilige Fahrmotor derart angesteuert wird, dass sich die Drehzahl einer Welle des Fahrmotors ändern sollte, und die Drehzahl der Welle ermittelt. Führt die Ansteuerung während eines nachfolgenden Fahrbetriebs des Fahrzeugs zu einer tatsächlichen Änderung der Drehzahl der Welle eines der Fahrmotoren, so kann ein zuvor abgeleiteter Zustand des zugehörigen Radsatzes, dass dieser nicht mehr mit dem Fahrmotor mechanisch verbunden ist, bestätigt werden.

Erfindungsgemäß wird zur Beurteilung des jeweiligen Zustands der Antriebsstränge die den Fahrmotoren jeweils zugeführte und/oder die von diesen abgegebene elektrische Energie betrachtet, wobei den Fahrmotoren elektrische Energie in einem Traktionsmodus zugeführt wird, während bei Einsatz einer elektrodynamischen Bremse in einem Bremsmodus elektrische Energie von den Fahrmotoren abgegeben wird. Generell erfolgt die Beurteilung dabei unabhängig von erfassten Drehzahlen von Wellen von Komponenten, die mit den Radsätzen mechanisch verbunden sind. Solche erfassten Drehzahlen können jedoch zur Bestätigung der Plausibilität des abgeleiteten Zustands herangezogen werden, wie nachfolgend näher beschrieben wird. Bei der Betrachtung der Energien wird vorzugsweise ein Betrag gebildet, sodass sich die einem Fahrmotor zugeführte und von diesem abgegebene Energie nicht gegenseitig aufheben, in dessen Folge wiederum gegebenenfalls nicht vergleichbare Werte der bestimmten Energien der Antriebsstränge resultieren könnten.

Der erfindungsgemäße Vergleich der bestimmten Energie eines jeweiligen Antriebsstrangs mit einem Energie-Schwellwert ermöglicht es, eine Aussage über die Qualität bzw. eine Fehlerwahrscheinlichkeit der Information über eine indirekt erfasste Drehzahl eines Radsatzes eines Antriebsstrangs treffen zu können, welche in Steuerungen für das Antriebssystem, Bremssystem sowie weiteren sicherheitsrelevanten Systemen des Fahrzeugs berücksichtigt werden kann. Wird beispielsweise als Ergebnis des Verfahrens festgestellt, dass ein Radsatz mit einer größeren Wahrscheinlichkeit nicht mehr mit einer weiteren Komponente des Antriebsstrangs, an deren Welle eine Drehzahl erfasst wird, mechanisch verbunden ist, die Drehzahlinformation also von geringer Qualität bzw. mit einer größeren Wahrscheinlichkeit fehlerbehaftet ist, so kann dies von den Steuerungen des Fahrzeugs berücksichtigt werden bzw. von diesen, sofern erforderlich, bestimmte Maßnahmen ergriffen werden.

Eine solche Berücksichtigung bzw. Maßnahme kann beispielsweise darin resultieren, dass eine mögliche Höchstgeschwindigkeit des Fahrzeugs begrenzt wird, eine Neuberechnung des Bremsvermögens sowie entsprechende Anpassung von Bremskurven erfolgt oder sogar ein Abbremsen des Fahrzeugs bis zum Stillstand initiiert wird, um die Komponenten des Antriebssystems vor Beschädigungen zu schützen. Ebenso kann der betroffene Antriebsstrang beispielsweise von den Steuerungen derart behandelt werden, dass er bei der Steuerung des Antriebssystem, Bremssystems sowie gegebenenfalls weiteren sicherheitsrelevanten Systemen des Fahrzeugs unberücksichtigt bleibt. Weiterhin kann eine geeignete Information über den ermittelten Zustand des betroffenen Antriebsstrangs an einen Fahrzeugführer und/oder an eine zentrale Leitstelle übermittelt werden, auf dessen Basis dieser bzw. diese weitere Schritte zum Schutz des Antriebssystems des Fahrzeugs einleiten kann. Vorzugsweise sollte vor Ergreifen einer der genannten Maßnahmen der Zustand des betroffenen Antriebsstrangs, beispielsweise durch ein nochmaliges Bestimmen der jeweiligen Energie der Fahrmotoren und Vergleichens mit einem Energie-Schwellwert in einem nachfolgenden Zeit- oder Streckenintervall, nochmals abgeleitet und das Ergebnis bestätigt werden, um eine unnötige Beeinträchtigung des Betriebs des Fahrzeugs zu vermeiden.

Das Zeitintervall, über das die jeweilige Energie der Fahrmotoren bestimmt wird, kann als ein gleitendes Zeitintervall definiert sein, bei dem von jedem Zeitpunkt, an dem die Energie bestimmt wird, aus ein bestimmter davor liegender Zeitraum betrachtet wird. Alternativ kann das Zeitintervall auch durch spezifische Anfangs- und Endzeitpunkte definiert sein. Im zweiten Fall können auch mehrere, zeitlich getrennte und sich nicht überlappende Zeitintervalle für die Bestimmung der jeweiligen Energie berücksichtigt werden. Vorzugsweise sollte das Zeitintervall eine bestimmte Dauer nicht unterschreiten, um gegebenenfalls auftretende Energiedifferenzen zwischen Antriebssträngen, welche bedingt durch zeitweilige Regeleingriffe beispielsweise eines Gleit- bzw. Schleuderschutzes oder durch den Ort der Anordnung des Antriebsstrangs im Fahrzeug auftreten können, vernachlässigen zu können. Beispielsweise kann das Zeitintervall einige Minuten bis zu wenige Stunden umfassen.

Entsprechend der Definition des Zeitintervalls kann auch die Strecke definiert sein, über die eine jeweilige Energie der Fahrmotoren bestimmt wird. Dabei wird bei einem gleitenden Streckenintervall von jedem Streckenpunkt, bei dessen Passieren die Energie bestimmt wird, aus eine bestimmte von dem Fahrzeugs bereits zurückgelegte Strecke betrachtet. Alternativ können wiederum spezifische Anfangs- und Endstreckenpunkte definiert sein, deren Passieren beispielsweise mittels eines im Fahrzeug installierten Positionierungssystems, insbesondere eines bekannten Navigationssystems, ermittelt werden kann. Auch können diese Streckenpunkte durch im Gleisbett angeordnete Balisen definiert werden, welche Informationen über ihre geografische Position an das Fahrzeug übergeben. Weiterhin können die Streckenpunkte auch Haltestellen sein und die für die Bestimmung der Energie betrachtete Strecke der vom Fahrzeug zurückgelegten Strecke zwischen zwei Haltestellen entsprechen. Wie vorstehend bezüglich der Definition des Zeitintervalls bereits erwähnt, sollte die betrachtete Strecke eine bestimmte Länge, die beispielsweise der genannten Länge des Zeitintervalls entspricht, nicht unterschreiten.

Generell kann bei der Bestimmung der jeweiligen Energie der Fahrmotoren ausschließlich die den Fahrmotoren zugeführte Energie, wie sie in einem Traktionsmodus des Antriebssystems des Fahrzeugs für ein Beschleunigen und Halten einer erreichten Geschwindigkeit erforderlich ist, berücksichtigt werden. Durch Berücksichtigung auch der von den Fahrmotoren in einem Bremsmodus während des Einsatzes einer elektrodynamischen Bremse jeweils abgegebenen Energie kann jedoch eine ausreichende Länge des Zeitintervalls bzw. der Strecke vorteilhaft verkürzt werden. Alternativ kann auch nur die von den Fahrmotoren abgegebene Energie bestimmt werden, beispielsweise bei Durchfahren einer Strecke mit einem Gefälle, über dessen Länge sich das Antriebssystem nicht oder nur vergleichsweise kurz in einem Traktionsmodus befindet.

Gemäß einer ersten Weiterbildung des erfindungsgemäßen Verfahrens wird für das Bestimmen der jeweiligen elektrischen Energie der Fahrmotoren die den zumindest zwei Fahrmotoren jeweils zugeführte und/oder von den zumindest zwei Fahrmotoren abgegebene elektrische Leistung kontinuierlich oder periodisch über das Zeitintervall bestimmt.

Die den Fahrmotoren zugeführte bzw. von diesen abgegebene jeweilige elektrische Leistung kann mittels verschiedener Verfahren bestimmt werden, wobei durch Verwendung von zumindest zwei solcher Verfahren eine redundante Bestimmung und damit eine höhere Sicherheit der Plausibilität der bestimmten Leistung erzielt werden kann. Beispielsweise kann die zugeführte Leistung in der Steuereinrichtung der Fahrmotoren aus der Kombination aus Stromstärke und Spannung bestimmt werden. Alternativ kann über bekannte Einrichtungen zur Erfassung von Strom und Spannung auf die Leistung geschlossen werden, wobei diese vorteilhaft auch zur Bestimmung der von den Fahrmotoren abgegebener Leistung verwendet werden können. Schließlich kann, insbesondere bei Einsatz von Asynchronmotoren als Fahrmotoren, aus Kenngrößen des Betriebspunktes des Fahrmotors, beispielsweise dem Schlupf, die Leistung bestimmt werden. Die den Fahrmotoren zugeführte und/oder von diesen abgegebene Leistung wird vorzugsweise kontinuierlich bestimmt, wobei alternativ auch eine Bestimmung in bestimmten Zeitabständen, beispielsweise einmal pro Sekunde, erfolgen kann.

Gemäß einer weiteren Weiterbildung des erfindungsgemäßen Verfahrens wird das Zeitintervall bzw. die Strecke derart bemessen, dass in diesem zumindest ein Fahr- und/oder Bremsbetrieb des Fahrzeugs enthalten ist. Beispielsweise kann das Zeitintervall die geplante Fahrzeit zwischen zwei Haltestellen bzw. die Strecke zwischen diesen Haltestellen umfassen, da diese Strecke nach einem Halt des Fahrzeugs an einer Start-Haltestelle zumindest eine Beschleunigungsphase bis zu einer Reisegeschwindigkeit des Fahrzeugs, in der den Fahrmotoren Energie zugeführt wird, eine Phase des Aufrechterhaltens der Reisegeschwindigkeit, in der zumindest teilweise den Fahrmotoren weiterhin Energie zugeführt wird, sowie eine Bremsphase mit Einsatz der elektrodynamischen Bremse vor Erreichen der Ziel-Haltestelle, in der zumindest teilweise Energie von den Fahrmotoren abgegeben wird, umfasst. Hierdurch wird sichergestellt, dass sich das Antriebssystem des Fahrzeugs zumindest zeitweilig in einem Traktions- bzw. Bremsmodus befindet, in dem den Fahrmotoren der Antriebsstränge Energie zugeführt und/oder von diesen abgegeben wird. Vorteilhaft wird hierdurch die Vergleichbarkeit der bestimmten Energien der Fahrmotoren erhöht.

Gemäß einer weiteren Weiterbildung des erfindungsgemäßen Verfahrens wird für das Bestimmen der den zumindest zwei Fahrmotoren jeweils zugeführten elektrischen Energie zumindest ein Teil des Zeitintervalls oder der Strecke berücksichtigt, in dem sich das Fahrzeug während des Fahrbetriebs mit einer Geschwindigkeit bewegt, die einen vorgegebenen Geschwindigkeits-Schwellwert überschreitet. Die Definition einer erforderlichen Mindestgeschwindigkeit des Fahrzeugs zur Bestimmung der den Fahrmotoren jeweils zugeführten Energie erhöht ebenfalls die Vergleichbarkeit der bestimmten Energien der Fahrmotoren, da angenommen werden kann, dass zum Halten einer über dem Schwellwert liegenden Geschwindigkeit ein hinreichender Leistungsbedarf der Fahrmotoren zur Überwindung von Fahrwiderständen existiert.

Gemäß einer weiteren Weiterbildung des erfindungsgemäßen Verfahrens wird der Energie-Schwellwert aus einem Mittelwert einer Summe der bestimmten Energien der zumindest zwei Fahrmotoren abgeleitet. Da die den Fahrmotoren zugeführte bzw. von diesen abgegebene Energie von dem betrachteten Zeitintervall bzw. der betrachteten Strecke abhängt, wird beispielsweise von der Steuereinrichtung des Antriebssystems eine Summe der für die Fahrmotoren der Antriebsstränge bestimmten Energien gebildet, aus der ein Mittelwert bzw. eine durchschnittliche Energie berechnet wird. Dieser Mittelwert kann dann als der Energie-Schwellwert verwendet werden, mit dem die jeweils bestimmte Energie der Fahrmotoren verglichen wird. Wie vorstehend beschrieben, kann aus diesem Vergleich auf den jeweiligen Zustand der Antriebsstränge geschlossen werden, aus dem wiederum eine Aussage über die Qualität bzw. eine Fehlerwahrscheinlichkeit der Information über eine indirekt erfasste Drehzahl eines Radsatzes getroffen werden kann. Weicht beispielsweise die bestimmte Energie eines Fahrmotors signifikant von dem Energie-Schwellwert ab, wird dem Fahrmotor im Vergleich zu dem weiteren Fahrmotor bzw. den weiteren Fahrmotoren also signifikant weniger Energie zugeführt und bzw. oder von diesem abgegeben, so kann hieraus abgeleitet werden, dass eine Störung in dem Antriebsstrang dieses Fahrmotors, beispielsweise in Form eines vorstehend genannten Kupplungsbruchs, vorliegt. Sofern dies der Fall ist, ist die Information über die indirekt erfasste Drehzahl des mit dem betroffenen Fahrmotor mechanisch verbundenen Radsatzes von geringer Qualität bzw. als potenziell fehlerbehaftet anzusehen. Von einer signifikanten Abweichung kann beispielsweise ausgegangen werden, wenn die bestimmte Energie eines Fahrmotors den Energie-Schwellwert um mehr als fünfzig Prozent unterschreitet. In gleicher Weise kann auch von einer Störung des Antriebsstrangs ausgegangen werden, wenn die bestimmte Energie eines Fahrmotors den Energie-Schwellwert signifikant, beispielsweise wiederum um fünfzig Prozent, überschreitet.

Ein Mittelwert wird vorzugsweise dann verwendet, wenn angenommen werden kann, dass sich die zugeführte und/oder abgegebene Energie grundsätzlich gleichmäßig auf die Fahrmotoren verteilt. Eine Bedingung für diese Annahme kann das Vorliegen eines vorstehend beschriebenen ausreichend langen Zeitintervalls bzw. einer ausreichend langen Strecke sein. Jedoch kann beispielsweise der Einbauort des Fahrmotors bzw. des zugehörigen Radsatzes im Fahrzeug sowie Eingriffe von sicherheitsrelevanten Steuerungen, wie beispielsweise für den Gleit- bzw. Schleuderschutz, zu einer uneinheitlichen Verteilung der Energien auf die Antriebsstränge bzw. Fahrmotoren während des betrachteten Zeitintervalls bzw. der betrachteten Strecke führen. Sinnvollerweise wird der Energie-Schwellwert daher derart definiert, dass durch solche Umstände bedingte Abweichungen noch nicht als signifikant betrachtet werden und deshalb noch nicht zu einem Auslösen von Maßnahmen, wie sie vorstehend beispielhaft beschrieben wurden, führen. Alternativ oder ergänzend kann der Energie-Schwellwert in Kenntnis dieser Gründe für mögliche Abweichungen für jeden Fahrmotor individuell festgelegt werden, beispielsweise durch Berücksichtigung eines Fahrmotor- bzw. Antriebsstrang-individuellen Verringerungsfaktors, mit dem der Energie-Schwellwert beaufschlagt wird.

Gemäß einer weiteren Weiterbildung des erfindungsgemäßen Verfahrens wird eine Drehzahl des Radsatzes des jeweiligen Antriebsstrangs aus einer Drehzahl einer Welle des Fahrmotors, einer Kupplung und/oder eines Getriebes abgeleitet. Dabei erfolgt die Bestimmung der Drehzahl bzw. Drehzahlen beispielsweise abhängig von der eingesetzten Konfiguration des Antriebsstrangs, d.h. abhängig von dem Einsatz einer mit dem Fahrmotor verbundenen Kupplung und/oder eines mit der Kupplung oder direkt mit dem Fahrmotor verbundenen Getriebes, sowie dem im Bereich dieser Komponenten jeweils zur Verfügung stehende Bauraum für eine Anordnung von Drehzahlsensoren. Die Bestimmung der Drehzahl von Wellen dieser Komponenten kann dabei auch redundant erfolgen, um auch diese Information mit einer höheren Qualität bzw. geringeren Wahrscheinlichkeit eines Fehlers den diese Information nutzenden Steuerungen zur Verfügung zu stellen.

Einer auf der vorstehenden Weiterbildung basierenden weiteren Weiterbildung des erfindungsgemäßen Verfahrens zufolge wird aus dem abgeleiteten Zustand des jeweiligen Antriebsstrangs auf eine Plausibilität der abgeleiteten Drehzahl des Radsatzes dieses Antriebsstrangs geschlossen. Wie vorstehend bereits ausgeführt, dient das erfindungsgemäße Verfahren dazu, eine Qualität einer indirekt bestimmten Information über die Drehzahl eines Radsatzes des Fahrzeugs beurteilen zu können, um basierend auf dieser Beurteilung gegebenenfalls Maßnahmen ergreifen zu können.

Gemäß einer weiteren Weiterbildung wird der abgeleitete Zustand des jeweiligen Antriebsstrangs nachfolgend während eines nachfolgenden Stillstands des Fahrzeugs dadurch geprüft, dass der jeweilige Fahrmotor während eines Zeitintervalls des Stillstands derart angesteuert wird, dass er ein Moment erzeugt, und eine Drehzahl einer Welle des Fahrmotors ermittelt wird. Führt die Ansteuerung während eines Stillstands des Fahrzeugs zu einer tatsächlichen Änderung der Drehzahl der Welle eines der Fahrmotoren, so kann ein zuvor abgeleiteter Zustand des zugehörigen Radsatzes, dass dieser nicht mehr mit dem Fahrmotor mechanisch verbunden ist, bestätigt werden.

Ein zweiter Aspekt der Erfindung betrifft eine Anordnung zur Überwachung eines Antriebssystems eines spurgebundenen Fahrzeugs. Dabei weist das Antriebssystem zumindest zwei Antriebsstränge mit jeweils einem elektrischen Fahrmotor und einem Radsatz, sowie eine Steuereinrichtung auf. Die Steuereinrichtung ist erfindungsgemäß dazu ausgestaltet, eine jeweilige über ein Zeitintervall oder eine Strecke den Fahrmotoren zugeführte und/oder von den Fahrmotoren abgegebene elektrische Energie zu bestimmen, die bestimmte jeweilige elektrische Energie der Fahrmotoren mit einem Energie-Schwellwert zu vergleichen, und aus dem Vergleich einen Zustands des jeweiligen Antriebsstrangs abzuleiten.

Die Steuereinrichtung ist ferner erfindungsgemäß dazu ausgestaltet, den abgeleiteten Zustand des jeweiligen Antriebsstrangs nachfolgend während des Fahrbetriebs dadurch zu prüfen, dass der jeweilige Fahrmotor derart angesteuert wird, dass sich die Drehzahl einer Welle des Fahrmotors ändern sollte, und die Drehzahl der Welle ermittelt wird.

Das Fahrzeug ist gemäß einer Weiterbildung der erfindungsgemäßen Anordnung als ein Schienenfahrzeug und insbesondere als ein Triebzug ausgestaltet.

Gemäß einer weiteren Weiterbildung der Anordnung sind in jedem Antriebsstrang zwischen dem Antriebsmotor und dem Radsatz eine Kupplung und/oder ein Getriebe angeordnet. An Wellen dieser weiteren Komponenten sowie des Fahrmotors können gemäß einer weiteren Weiterbildung der Anordnung ein oder mehrere Drehzahlsensoren angeordnet sein zur Erfassung einer jeweiligen Drehzahl dieser Wellen.

Im Folgenden wird die Erfindung anhand eines Ausführungsbeispiels näher erläutert. Dabei zeigen:
- FIG 1: ein Schienenfahrzeug in einer Seitenansicht,
- FIG 2: ein Triebdrehgestell in einer Draufsicht,
- FIG 3: ein Antriebssystem mit vier Antriebssträngen,
- FIG 4: eine Fahrsituation des Schienenfahrzeugs, und
- FIG 5: ein Ablaufdiagramm des erfindungsgemäßen Verfahrens.

Aus Gründen der Übersichtlichkeit werden in den Figuren für gleiche bzw. gleich oder nahezu gleich wirkende Komponenten dieselben Bezugszeichen verwendet.

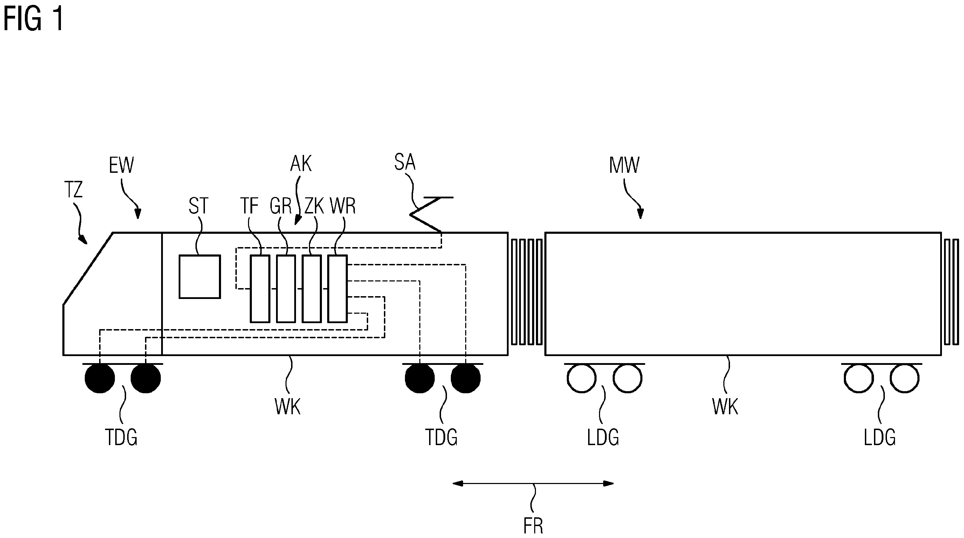

FIG 1 zeigt schematisch ein beispielhaftes Schienenfahrzeug in einer Seitenansicht. Das Schienenfahrzeug ist als ein Triebzug TZ für den Personentransport mit einer Mehrzahl Wagen ausgestaltet, wobei lediglich ein erster Wagen in Form eines Endwagens EW sowie ein an den ersten Wagen angekuppelter zweiter Wagen in Form eines Mittelwagens MW dargestellt sind. Die beiden Wagen verfügen jeweils über einen Wagenkasten WK, der sich über Drehgestelle in Form von Triebdrehgestellen TDG bzw. Laufdrehgestellen LDG auf nicht dargestellten Schienen abstützt. Der Wagenkasten WK des dargestellten Endwagens EW ist beispielhaft in mehrere räumliche Bereiche unterteilt. Diese Bereiche sind zum einen ein Führerraum im vorderen Bereich des Wagenkastens WK, zum anderen ein an den Führerraum angrenzender Fahrgastraum, in dem Sitzmöglichkeiten für Fahrgäste vorgesehen sind. Der mit dem Endwagen EW verkuppelte Mittelwagen MW weist hingegen ausschließlich einen Fahrgastraum auf. Der jeweilige Fahrgastraum der beiden Wagen kann von Fahrgästen über in Seitenwänden des jeweiligen Wagenkastens angeordnete, nicht dargestellte Türen betreten und verlassen werden. Weiterhin können Fahrgäste über einen Wagenübergang in den jeweils benachbarten Wagen gelangen. Derartige Wagenübergänge werden in der Regel durch Wellen- oder Faltenbälge vor Umwelteinflüssen geschützt.

In dem Endwagen EW des beispielhaften Triebzugs TZ der FIG 1 sind weiterhin bekannte Komponenten einer typischen Antriebskette AK eines elektrisch angetriebenen Triebzugs schematisch angegeben. Diese sind dabei lediglich beispielhaft im Bereich des beschriebenen Fahrgastraums des Endwagens EW angeordnet, während sie in der Praxis in bekannter Weise an anderen Stellen des Wagens, beispielsweise in einem speziellen Raum bzw. Bereich innerhalb des Wagenkastens, im Unterflurbereich oder auch im Dachbereich des Wagenkastens angeordnet sein können. Auch eine Verteilung der Komponenten in gleicher Weise wie eine Verteilung der Triebdrehgestelle auf mehrere Wagen des Schienenfahrzeugs ist dabei möglich. Beispielhaft wird hierzu auf das Patent EP2812208B1 verwiesen, in dem Komponenten der Antriebskette über mehrere Wagen eines Schienenfahrzeugs verteilt angeordnet sind.

Über einen beispielhaft im Dachbereich des Wagenkastens des Endwagens EW angeordneten Stromabnehmer SA ist die Antriebskette AK mit einer nicht dargestellten Fahrleitung bzw. Oberleitung in Kontakt, aus der sie beispielsweise eine Einphasenwechselspannung des Bahnversorgungsnetzes bezieht.

Diese Wechselspannung wird, über einen ebenfalls nicht dargestellten Hauptschalter, einer Primärwicklung eines Transformators TF zugeführt, in dem die Hochspannung des Netzes heruntertransformiert wird. Eine Sekundärwicklung des Transformators TF ist mit einem Gleichrichter GR verbunden, in dem die transformierte Wechselspannung gleichgerichtet wird. Dem Gleichrichter GR ist ein Gleichspannungs-Zwischenkreis ZK nachgeschaltet, aus dem wiederum ein Wechselrichter WR gespeist wird. Der Wechselrichter ist dabei beispielsweise als ein Pulswechselrichter mit Schaltelementen, insbesondere IGBT (Insulated Gate Bipolar Transistor) Halbleiterbauteile, ausgeführt. Die beschriebene Kombination aus Gleichrichter, Zwischenkreis und Wechselrichter wird auch als Frequenzumrichter oder Traktionsstromrichter bezeichnet. Deren Funktion ist es allgemein, aus einer Wechselspannung des Netzes eine in der Frequenz und Amplitude veränderbare Dreiphasenwechselspannung zu generieren, mit denen Drehzahl und Drehmoment von Drehstrommotoren bzw. Asynchronmaschinen für die Traktion eines Schienenfahrzeugs geregelt werden. In dem Beispiel der FIG 1 versorgt der Wechselrichter WR vier in zwei Triebdrehgestellen TDG des Endwagens EW angeordnete Fahrmotoren. Alternativ ist es jedoch in gleicher Weise möglich, lediglich am vorderen Ende des Wagenkastens, im Bereich des Führerraums, ein Triebdrehgestell mit zwei angetriebenen Radsatzwellen anzuordnen, während an dem hinteren Ende des Wagenkastens, im Bereich des Wagenübergangs, als weiteres Drehgestell ein Laufdrehgestell eingesetzt wird. Dieses Laufdrehgestell kann dabei auch in Form eines bekannten Jakobs-Drehgestells ausgeführt sein und sowohl das hintere Ende des Endwagens als auch das vordere Ende des Mittelwagens abstützen. Ein zweites Triebdrehgestell mit ebenfalls zwei angetriebenen Radsatzwellen wird beispielsweise unter einem weiteren Wagen, insbesondere einem Mittelwagen oder einem zweiten Endwagen, angeordnet. Für dieses zweite Triebdrehgestell kann auch ein weiterer, mit dem Gleichspannungs-Zwischenkreis verbundener und im gleichen Wagen wie das zweite Triebdrehgestell angeordneter Wechselrichter vorgesehen werden.

Gesteuert wird die Funktion der beschriebenen Komponenten von einer beispielhaft dargestellten Steuereinrichtung ST, wobei diese auch aus mehreren, den einzelnen Komponenten jeweils zugeordneten Einrichtungen bestehen kann, sofern die jeweilige Komponente zur Ausführung ihrer Funktion eine Steuerung benötigt.

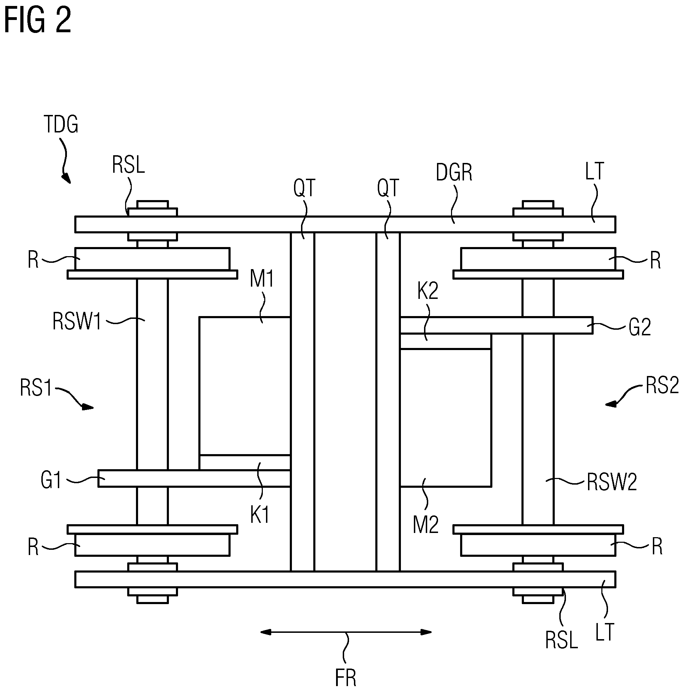

FIG 2 zeigt schematisch ein beispielhaftes Triebdrehgestell TDG in einer Draufsicht. Nach dem Beispiel der FIG 1 stützt sich der Wagenkasten WK des Endwagens EW des Triebzugs TZ auf zwei solchen Triebdrehgestellen TDG ab. Jedes Triebdrehgestell TDG weist zwei Radsätze RS1, RS2 auf, die an einem Drehgestellrahmen DGR befestigt sind. Die Radsätze RS1, RS2 bestehen dabei jeweils aus einer Radsatzwelle RSW1, RSW2, zwei Rädern R sowie Radsatzlagern RSL. Der Drehgestellrahmen DGR besteht dabei beispielhaft aus zwei sich in Fahrtrichtung FR des Schienenfahrzeugs parallel erstreckenden Langträgern LT sowie zwei senkrecht zu diesen ausgerichteten und mit diesen verbundenen Querträgern QT. In dem Beispiel der FIG 2 sind zwei Fahrmotoren M1, M2 jeweils zwischen einem Querträger QT und einer Radsatzwelle RSW1, RSW2 eines dem jeweiligen Fahrmotor M1, M2 zugeordneten Radsatzes RS1, RS2 angeordnet und am primär gefederten Drehgestellrahmen DGR befestigt. Alternativ zu der dargestellten so genannten Außenlagerung des Radsätze kann auch eine Innenlagerung eingesetzt werden, bei der die Langträger innerhalb der Räder bzw. Radscheiben verlaufen. Die Motorachsen der Fahrmotoren M1, M2 sind somit parallel zur Drehachse des jeweiligen Radsatzes RS1, RS2 und damit quer zur Fahrrichtung FR des Triebzugs ausgerichtet. Eine solche Anordnung ist auch unter dem Begriff Querantrieb bekannt. Das Drehmoment der Fahrmotoren M1, M2 wird jeweils über eine Kupplung K1, K2 sowie eine Getriebeeinheit G1, G2, beispielsweise ein Reduktionsgetriebe bzw. einstufiges Stirnradgetriebe, auf die Radsatzwelle RSW1, RSW2 des zugeordneten Radsatzes RS1, RS2 mechanisch übertragen. Der jeweilige Radsatz RS1, RS2 ist in der Regel sekundär gefedert und beschränkt beweglich im Drehgestellrahmen DGR gelagert. Das Getriebe G1, G2 stützt sich einerseits auf der Radsatzwelle RSW1, RSW2, andererseits über eine nicht dargestellte Drehmomentstütze an dem Drehgestellrahmen DGR ab. Der Fahrmotor M1, M2 ist somit vollgefedert, während das Getriebe G1, G2 nur teilgefedert ist. Der Kupplung K1, K2 kommt daher ergänzend die Aufgabe zu, Relativbewegungen zwischen Fahrmotor und Getriebe auszugleichen. Hierfür wird insbesondere bei Hochgeschwindigkeits-Triebzügen eine Bogenzahnkupplung eingesetzt, die derartige relative Bewegungen ausgleichen kann. Alternativ zu der in FIG 2 dargestellten Anordnung kann eine mechanische Kopplung der Fahrmotoren mit den Radsätzen RS1, RS2 auch lediglich mittels Kupplungen und ohne zusätzliche Getriebeeinheit erfolgen. Auch ist der Einsatz eines so genannten Direktantriebs ohne Getriebe denkbar.

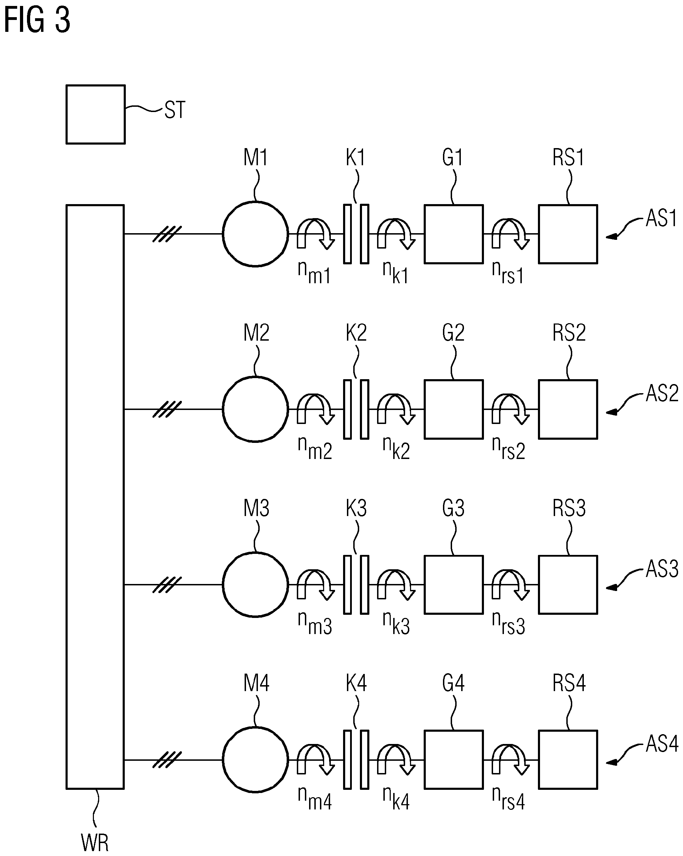

FIG 3 zeigt basierend auf den FIG 1 und FIG 2 schematisch Komponenten eines beispielhaften Antriebssystems mit vier Antriebssträngen, anhand derer die erfindungsgemäße Überwachung des Antriebssystems beschrieben wird. Die schematisch dargestellten vier Antriebsstränge AS1-AS4 werden durch einen gemeinsamen Frequenzumrichter, von dem lediglich der Wechselrichter WR entsprechend der FIG 1 dargestellt ist, in bekannter Weise gespeist. Insbesondere bei einer Speisung mehrerer Antriebsstränge durch einen gemeinsamen Wechselrichter bzw. Traktionsstromrichter besteht die vorstehend beschriebene Schwierigkeit darin, die Störung eines Antriebsstrangs zu erkennen, da die weiteren Antriebsstränge eine verringerte Antriebsleistung eines Antriebsstrangs zumindest teilweise selbsttätig ausgleichen können.

Entsprechend vorstehender Beschreibung generiert der gemeinsame Frequenzumrichter, durch die beispielhaft dargestellte Steuereinrichtung ST gesteuert, in der Frequenz und Amplitude veränderbare Dreiphasenwechselspannungen, mit denen Drehzahl und Drehmoment der als Asynchronmaschinen ausgestalteten Fahrmotoren M1-M4 der Antriebsstränge AS1-AS4 gesteuert werden. Die Fahrmotoren M1-M4 sind jeweils über eine Antriebswelle mechanisch mit einer Kupplung K1-K4, beispielsweise einer vorstehend genannten Bogenzahnkupplung, verbunden. Eine jeweilige Abtriebswelle, d.h. lastseitige Welle der Kupplungen K1-K4, deren Verbindung mit der jeweiligen Antriebswelle durch die Kupplungen hergestellt wird, ist wiederum mit einer Eingangsseite eines Getriebes G1-G4 mechanisch verbunden. Die Ausgangsseite des jeweiligen Getriebes G1-G4 ist, wie in FIG 2 dargestellt, mit einem Radsatz RS1-RS4 verbunden.

In dem beispielhaft dargestellten Antriebssystem wird, wie einleitend beschrieben, die jeweilige Drehzahl nᵣₛ₁-nᵣₛ₄ der Radsätze RS1-RS4 nicht direkt mittels an den Radsatzwellen oder den Rädern angeordneten Drehzahlsensoren erfasst, sondern indirekt aus der erfassten Drehzahl einer weiteren Welle des jeweiligen Antriebsstrangs AS1-AS4 abgeleitet. Beispielsweise wird anstelle der Drehzahl nᵣₛ₁-nᵣₛ₄ des Radsatzes RS1-RS4 die Drehzahl nₘ₁-nₘ₄ der Antriebswelle des Fahrmotors M1-M4 mittels eines daran angeordneten Drehzahlsensors erfasst. Bei dieser Konfiguration sollte ein gegebenenfalls existierender Schlupf der dem Fahrmotor nachgeschalteten Kupplung, welcher zu einer Drehzahldifferenz zwischen Antriebs- und Abtriebswelle der Kupplung führen kann, bei der Ableitung der Drehzahl des Radsatzes berücksichtigt werden. In jedem Fall muss ein Übersetzungsverhältnis des zwischen Kupplung K1-K4 und Radsatz angeordneten Getriebes G1-G4 berücksichtigt werden. Alternativ oder, für eine redundante Erfassung, ergänzend ist beispielsweise eine Erfassung der Drehzahl nₖ₁-nₖ₄ der Abtriebswelle der Kupplung K1-K4 denkbar.

Wie vorstehend bereits erwähnt, wird die Information über die indirekt erfasste Drehzahl des jeweiligen Radsatzes qualitativ bewertet, indem der Zustand der Antriebsstränge bzw. deren Integrität durch Betrachtung von den Fahrmotoren zugeführter und/oder von diesen abgegebener Leistung bzw. Energie beurteilt wird.

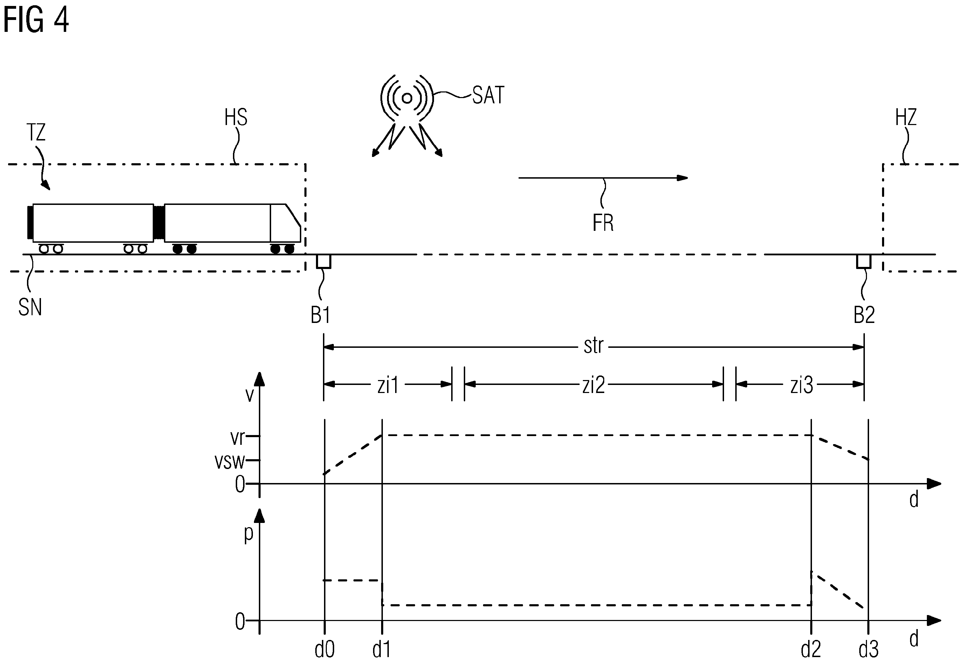

FIG 4 zeigt eine beispielhafte, dieser Beurteilung zugrunde liegende Betriebs- bzw. Fahrsituation des vorstehend bezüglich FIG 1 beschriebenen Triebzugs TZ. Im Verlauf der dargestellten Fahrsituation wird den vier Fahrmotoren bzw. den zwei Triebdrehgestellen des Endwagens des Triebzugs von dem vorgeschalteten Wechselrichter der Antriebskette elektrische Energie für ein Beschleunigen auf eine bestimmte Reisegeschwindigkeit vr und ein anschließendes Halten der erreichten Reisegeschwindigkeit zugeführt. Im Verlauf eines anschließenden Bremsens wird unter Einsatz der elektrodynamischen Bremse des Triebzugs TZ elektrische Energie von den Fahrmotoren generiert, von diesen an den Wechselrichter abgegeben und, sofern möglich, über die Antriebskette beispielsweise in die Fahrleitung gespeist.

In der dargestellten Ausgangssituation der FIG 4 befindet sich der Triebzug TZ zunächst in einem stationären Zustand im Bereich einer Haltestelle des Schienennetzes, nachfolgend als Start-Haltestelle HS bezeichnet. Nach Verlassen der Start-Haltestelle HS bewegt sich der Triebzug TZ in einem Fahrbetrieb über ein Schienennetz SN in Richtung einer Ziel-Haltestelle HZ, wo er wiederum einen stationären Zustand einnimmt. Die Start- und Ziel-Haltestellen HS, HZ sind lediglich schematisch durch strichpunktierte Linien dargestellt. Während eines jeweiligen Halts des Triebzugs TZ im Bereich der Haltestellen HS, HZ können Fahrgäste die Fahrgasträume der Wagen des Triebzugs TZ betreten und verlassen. Die Distanz, die der Triebzug TZ zwischen den beiden Haltestellen HS, HZ zurücklegt, kann beispielsweise mehrere Kilometer, bei einem Triebzug für den Hochgeschwindigkeitsbereich insbesondere auch mehrere zehn bis mehrere hundert Kilometer betragen.

Die den vier Fahrmotoren zugeführte und von diesen abgegebene Energie wird in dem Beispiel der FIG 4 über eine Strecke str bestimmt. Diese Strecke str entspricht beispielswiese der Distanz zwischen zwei jeweils nah den Haltestellen HS, HZ im Schienenbett des Schienennetzes SN angeordneten Balisen B1, B2 bzw. Baken. Derartige Balisen speichern Informationen, die von einem Schienenfahrzeug bei Passieren einer Balise über geeignete Antennen empfangen werden können. Die gespeicherten und an Schienenfahrzeuge übertragbaren Informationen beinhalten beispielsweise die jeweilige Position der Balise, anhand derer das Schienenfahrzeug wiederum seine eigene aktuelle Position ermitteln kann. Sie sind daher besonders für die Definition eines Anfangs- und Endpunktes einer Strecke geeignet, da die Steuereinrichtung ST des Triebzugs TZ bei Überfahren der jeweiligen Balise B1, B2 diese Punkte eindeutig identifizieren kann. Für die Definition der Strecke str bzw. zur Speicherung der Strecke str in einer Speichereinrichtung des Triebzugs, welche mit der Steuereinrichtung ST verbunden ist, ist es daher ausreichend, die Positionsinformationen der Balisen zu definieren. Alternativ kann die Definition der Strecke str auch mittels einer jeweiligen Identifikationsnummer der Balisen, die ebenfalls Teil der an das passierende Schienenfahrzeug übertragenen Informationen ist, erfolgen.

Anstelle von Balisen können beispielsweise auch aus Signalen eines bekannten globalen Navigationssystems abgeleitete Positionsinformationen verwendet werden. Stellvertretend hierfür ist in FIG 4 ein Satellit SAT als Teil eines solchen Systems angegeben. Mittels in Signalen der Satelliten enthaltenen Positionsinformationen ist ein Empfänger dieser Informationen in der Lage, sich im dreidimensionalen Raum zu positionieren. Moderne Schienenfahrzeuge sind in der Regel mit einer oder mehreren Antennen für den Empfang von Signalen eines solchen globalen Navigationssystems ausgestattet, und durch Auswertung dieser Signale in einem zugehörigen Empfänger in der Lage, die aktuelle geographische Position des Schienenfahrzeugs zu bestimmen. Bei Einsatz eines solchen globalen Navigationssystems kann eine Strecke str entsprechend durch Angabe von zwei bestimmten Orten bzw. Streckenpunkten des Schienennetzes, einen Startpunkt und einen Zielpunkt, definiert werden.

Alternativ zu der vorstehend beschriebenen Definition einer Strecke str kann auch ein Zeitintervall definiert werden, über welches die den vier Fahrmotoren zugeführte und/oder von diesen abgegebene Energie bestimmt wird. In der FIG 4 ist beispielhaft ein Zeitintervall zi1 angegeben, innerhalb dessen der Triebzug TZ in der dargestellten Fahrsituation einen bestimmten Teil der Strecke str zurücklegt. Nur beispielhaft ist das Zeitintervall zi kürzer als eine entsprechende Gesamtzeit, die der Triebzug TZ für ein Durchfahren der gesamten Strecke str benötigt, angegeben. Durch den beispielhaft gewählten Start-Zeitpunkt bzw. Beginn des Zeitintervalls zi1, dem Zeitpunkt des Passierens der ersten Balise B1, umfasst das Zeitintervall zi1 lediglich eine bestimmte Zeit des Beschleunigens bis zum Erreichen der Reisegeschwindigkeit vr, sowie eine anschließende bestimmte Zeit des Haltens der erreichten Reisegeschwindigkeit vr, nicht jedoch eine Zeit des Bremsens vor Erreichen der Ziel-Haltestelle HZ bzw. dem Passieren der zweiten Balise B2. Wie vorstehend beschrieben, kann das gewählte Zeitintervall zi1 bzw. die über dieses Zeitintervall bestimmte Energie jedoch ausreichend sein, um den jeweiligen Zustand der Antriebsstränge des Triebzugs TZ beurteilen zu können. Vorzugsweise sollte ein Zeitintervall derart bemessen sein, dass bei normalem bzw. erwartetem Betrieb des Schienenfahrzeugs während des Zeitintervalls zumindest teilweise eine Zufuhr und/oder eine Abgabe von Energie erfolgt.

Bei der Definition einer Strecke bzw. eines Zeitintervalls kann beispielsweise ergänzend ein Geschwindigkeits-Schwellwert vsw berücksichtigt werden, über welchen bei normalem bzw. erwartetem Betrieb die Geschwindigkeit des Schienenfahrzeugs im Verlauf des Zeitintervalls steigen und gegebenenfalls ergänzend über einen bestimmten Zeitraum gehalten werden muss. Eine solche erforderliche Mindestgeschwindigkeit des Schienenfahrzeugs stellt sicher, dass ein Zuführen von Energie zu den Fahrmotoren erforderlich ist, um diese Mindestgeschwindigkeit zu erreichen bzw. zu halten. Sofern während des eigentlichen Betriebs dieser Geschwindigkeits-Schwellwert vsw von dem Schienenfahrzeug, beispielsweise aufgrund von Störungen auf dem Schienennetz, nicht bzw. nicht ausreichend lang überschritten wird, kann von einer weiteren Verarbeitung der über die Strecke bzw. über das Zeitintervall bestimmten Energie abgesehen werden, und eine nachfolgende nochmalige Bestimmung der Energie über eine weitere Strecke bzw. ein weiteres Zeitintervall von der Steuereinrichtung des Schienenfahrzeugs initiiert werden.

Auch für eine Überprüfung bzw. Bestätigung der Beurteilung basierend auf dem Zeitintervall zi1 können nachfolgende weitere Zeitintervalle zi2, zi3 definiert werden, über die in gleicher Weise eine jeweilige den vier Fahrmotoren zugeführte und/oder von diesen abgegebene Energie bestimmt wird, wobei diese, wie in der FIG 4 beispielhaft dargestellt, auch eine unterschiedliche Dauer aufweisen können. So wird die Dauer eines zweiten Zeitintervalls zi2 beispielsweise größer als die Dauer des ersten zi1 und eines nachfolgenden dritten Zeitintervalls zi3 gewählt, da in dem zweiten Zeitintervall zi2 aufgrund des lediglich Haltens der erreichten Reisegeschwindigkeit eine geringere Energiezufuhr als die Energiezufuhr bzw. -abfuhr in dem ersten zi1 und dritten Zeitintervall zi3, die eine Phase des Beschleunigens bzw. des Bremsen mit hoher Energiezufuhr bzw. Energieabgabe enthalten, erwartet wird. Während des Haltens der Reisegeschwindigkeit und insbesondere auf Streckenabschnitten mit einem Gefälle können auch längere Zeiträume existieren, in denen der Triebzug TZ lediglich rollt und den Fahrmotoren keine Energie zugeführt wird. Auch dies sollte, insbesondere wenn die Reisegeschwindigkeit nahe der definierten Mindestgeschwindigkeit liegt, bei der Definition des beispielhaften zweiten Zeitintervalls zi2 berücksichtigt werden. Sofern das zweite Zeitintervall zi2 im Vergleich zu den beiden anderen Zeitintervallen zi1, zi3 lang definiert wird, kann die den Fahrmotoren jeweils zugeführte Leistung beispielsweise auch nur periodisch, beispielsweise alle ein bis 10 Sekunden, bestimmt werden, um die Menge zu verwertender Daten zur Bestimmung der über das zweite Zeitintervall zi2 zugeführte Energie zu begrenzen, während in den Zeitintervallen zi1 und zi3 die Leistung jeweils kontinuierlich bestimmt wird.

In dem Beispiel der FIG 4 sind die Zeitintervalls zi1-zi3 jeweils durch kürzere Zeiträume voneinander getrennt. In diesen Zeiträumen kann beispielsweise die Bestimmung der Energien, das Ableiten der Zustände der Antriebsstränge sowie das Ergreifen von Maßnahmen, sofern erforderlich, durch die Steuereinrichtung der Triebzugs erfolgen. Die Zeitintervalle zi1-zi3 können sich jedoch in gleicher Weise nahtlos aneinander anschließen und die kontinuierliche bzw. periodische Bestimmung der Leistungen parallel zu den genannten Schritten erfolgen.

Entsprechend dem beschriebenen Vorsehen mehrerer Zeitintervalle, insbesondere für eine Überprüfung bzw. Bestätigung eines abgeleiteten Zustands der Antriebsstränge des Triebzugs kann in gleicher Weise die vorstehend beschriebene Strecke str in mehrere kürzere Teilstrecken unterteilt werden. Diese Teilstrecken sollten entsprechend den Zeitintervallen derart bemessen werden, dass nach einem normalen bzw. erwarteten Betrieb des Schienenfahrzeugs in jeder der Teilstrecken zumindest teilweise eine Zufuhr und/oder eine Abgabe von Energie erfolgt, um eine Beurteilung des jeweiligen Zustands der Antriebsstränge aus den bestimmten Energien zu ermöglichen.

In der beispielhaften Fahrsituation der FIG 4 beschleunigt der Triebzug TZ aus einem stationären Zustand während des Haltens im Bereich der Start-Haltestelle HS auf eine beispielsweise vom Fahrzeugführer gewählte Reisegeschwindigkeit vr, hält diese Reisegeschwindigkeit vr über eine längere Strecke bzw. über einen längeren Zeitraum, und bremst vor Erreichen der Ziel-Haltestelle HZ wieder ab, um schließlich im Bereich der Ziel-Haltestelle HZ zum Stillstand zu kommen bzw. wieder in einen stationären Zustand überzugehen. Ein erstes Diagramm der FIG 4 zeigt beispielhaft den Verlauf der Geschwindigkeit v des Triebzugs über eine Distanz d, speziell über die durch die beiden Balisen B1, B2 definierte Strecke str. Die Strecken vor und nach den Balisen B1, B2 werden nachfolgend nicht weiter betrachtet. Ein darunter liegendes zweites Diagramm zeigt beispielhaft den zugehörigen Betrag der Summe der den vier Fahrmotoren des Triebzugs TZ zugeführten bzw. von diesen abgegebenen Leistung p.

Nach Passieren der ersten Balise B1, einem ersten Streckenpunkt d0, der den Beginn der definierten Strecke str angibt, beginnt die Steuereinrichtung des Triebzugs TZ eine kontinuierliche Bestimmung der den Fahrmotoren zugeführten Leistung. Bis zum Erreichen dieses ersten Streckenpunktes d0 wurde der Triebzug von dem Antriebssystem bereits auf eine bestimmte Geschwindigkeit beschleunigt, weshalb die Geschwindigkeitskurve des ersten Diagramms, beginnend in Streckenpunkt d0, nicht bei null beginnt. Im Verlauf der Teilstrecke zwischen dem ersten Streckenpunkt d0 und einem zweiten Streckenpunkt d1 beschleunigt der Triebzug weiter auf die gewünschte Reisegeschwindigkeit vr. Wie dem unteren Diagramm entnehmbar ist, wird die den Fahrmotoren zugeführte Leistung während des Beschleunigungsvorgangs über die Teilstrecke d0-d1 konstant gehalten. Sofern in Streckenpunkt d0 die zugeführte Leistung aufgrund des Kraftschlusses noch begrenzt wird, kann die Leistung über die Teilstrecke d0-d1 auch ansteigen . Die Darstellung der Geschwindigkeits- und Leistungskurven in den beiden Diagrammen auf der Teilstrecke d0-d1 ist rein schematisch, in der Praxis wird weder die Geschwindigkeitszunahme, noch die zugeführte Leistung vollkommen linear verlaufen.

Die den Fahrmotoren am Ende der Beschleunigungs-Teilstrecke zugeführte Leistung p ist ausreichend, um die erreichte Reisegeschwindigkeit vr auf der anschließenden längeren Teilstrecke zwischen dem zweiten Streckenpunkt d1 und einem dritten Streckenpunkt d2 zu halten. Diese Teilstrecke d1-d2 kann einige Kilometer, insbesondere Triebzügen für den Hochgeschwindigkeitsbereich auch mehrere zehn bis mehrere hundert Kilometer betragen. Im Verlauf der Teilstrecke d1-d2 kommt es, wie vorstehend bereits beschrieben, zu Fluktuationen in der Zuführung von Leistung, da insbesondere während Rollphasen und auf Streckenabschnitten mit Gefälle den Fahrmotoren eine verringerte bzw. keine Energie zugeführt wird. Auch kann die Reisegeschwindigkeit vr über die Teilstrecke d1-d2 variieren, beispielsweise aufgrund eines Durchfahrens von Streckenabschnitten mit einer erforderlichen geringeren Geschwindigkeit. Mithin können in der Teilstrecke d1-d2 auch Streckenabschnitte, insbesondere Streckenabschnitte mit Gefälle, enthalten sein, in denen der Triebzug durch Einsatz der elektrodynamischen Bremse die Reisegeschwindigkeit verringert und die Fahrmotoren entsprechend elektrische Energie abgeben.

Vor Erreichen der Ziel-Haltestelle HZ beginnt der Triebzug bei Erreichen des dritten Streckenpunktes d2 mit dem Abbremsen aus der zuvor gehaltenen Reisegeschwindigkeit, um im Bereich der Ziel-Haltestelle HZ schließlich zum Stehen zu kommen. Für dieses Abbremsen setzt der Triebzug, vorzugsweise vollständig oder unterstützt durch weitere Bremseinrichtungen, eine elektrodynamische Bremseinrichtung ein, bei der elektrische Leistung von den Fahrmotoren generiert und abgegeben wird.

Bei Erreichen der zweiten Balise B2, einem vierten Streckenpunkt d3, der das Ende der definierten Strecke str definiert, stoppt die Steuereinrichtung ST des Triebzugs die kontinuierliche bzw. periodische Bestimmung der den Fahrmotoren über die Teilstrecken d0-d1, d1-d2 und d2-d3 zugeführten sowie von diesen abgegebenen Leistung. Im Verlauf der letzten Teilstrecke d2-d3 vor Erreichen der zweiten Balise B2 wird die Geschwindigkeit v des Triebzugs durch das Bremsen auf eine niedrigere Geschwindigkeit verringert, mit der ein sicheres Einfahren in den Bereich der Ziel-Haltestelle HZ möglich ist. Ähnlich verringert sich auch die von den Fahrmotoren abgegebene Leistung von einem zu Beginn des Bremsens hohen Wert auf einen schließlich niedrigeren Wert, wie es wiederum beispielhaft in dem unteren Diagramm der FIG 4 dargestellt ist.

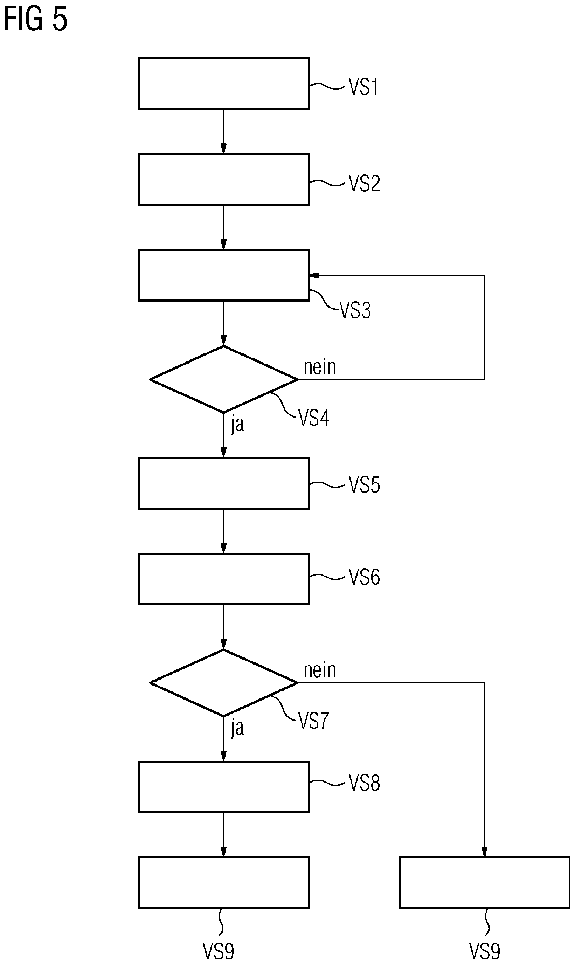

FIG 5 zeigt schließlich ein beispielhaftes Ablaufdiagramm des erfindungsgemäßen Verfahrens, welches nachfolgend bezugnehmend auf die beschriebene Fahrsituation der FIG 4 erläutert wird. Alle beschriebenen Verfahrensschritte können in der Steuereinrichtung ST des Triebzugs umgesetzt werden, jedoch können in gleicher Weise für die verschiedenen Schritte auch unterschiedliche, für spezifische Funktionen vorgesehene Steuereinrichtungen oder mehrere Steuereinrichtungen gemeinsam eingesetzt werden.

Das Verfahren startet in einem ersten Verfahrensschritt VS1. In einem zweiten Verfahrensschritt VS2 wird zunächst eine Strecke definiert, über die eine den vier Fahrmotoren jeweils zugeführte und gegebenenfalls von diesen abgegebene Energie bestimmt werden soll. Diese Strecke wird wie beschrieben beispielsweise durch Angabe von zwei Streckenpunkten, beispielsweise der Orte der Balisen B1 und B2, festgelegt. Die beiden Streckenpunkte und damit die zu betrachtende Strecke können beispielsweise vom Fahrzeugführer oder der Steuereinrichtung selbst, beispielsweise auf Basis eines verfügbaren Streckenplans, bestimmt und in einer Speichereinheit der Steuereinrichtung gespeichert werden.

In einem dritten Verfahrensschritt VS3 beginnt die Steuereinrichtung, nach Passieren des definierten Start-Streckenpunktes bzw. der ersten Balise B1 mit dem kontinuierlichen oder periodischen Bestimmen der den vier Fahrmotoren des Triebzugs jeweils zugeführten Leistung. Dabei kann von der Steuereinrichtung berücksichtigt werden, wenn es bei einem oder mehreren Antriebssträngen zu Regeleingriffen beispielsweise eines Gleit- bzw. Schleuderschutzes kommt. Derartige Eingriffe erfolgen insbesondere während des Beschleunigens des Fahrzeugs, beispielsweise wenn ein Radsatz aufgrund geringer Haftreibung zwischen Rädern und Schiene eingeregelt werden muss. Bei Detektion des Auftretens einer solchen Regelung verringert die Gleit- bzw. Schleuderschutzfunktion durch Verringerung der zugeführten Leistung das Drehmoment des Fahrmotors des betroffenen Antriebsstrangs. Hierbei kommt es also zu einer gezielten Verringerung der zugeführten Leistung zu einem der Antriebsstränge, welche jedoch keinen direkten Rückschluss auf einen möglichen Schaden dieses Antriebsstrangs zulässt. Auf derartige Regeleingriffe kann die Steuereinrichtung beispielsweise in der Weise reagieren, dass sie die über den Zeitraum eines Regeleingriffes zugeführte Leistung zu den Fahrmotoren bei der Bestimmung der zugeführten Energie unberücksichtigt lässt. Bei einer ausreichend langen Strecke, über die die zugeführte Energie bestimmt wird, können die Auswirkungen solcher Regeleingriffe bzw. einer zeitweiligen Verringerung der zugeführten Leistung jedoch vernachlässigt werden, sodass die Steuereinrichtungen diese nicht speziell berücksichtigen muss.

In einem vierten Verfahrensschritt VS4 prüft die Steuereinrichtung, ob der Ziel-Streckenpunkt der definierten Strecke erreicht bzw. ob der Triebzug die zweite Balise B2 passiert hat. Sofern der Ziel-Streckenpunkt noch nicht erreicht bzw. passiert wurde ("nein"), setzt die Steuereinrichtung die Bestimmung der den vier Fahrmotoren jeweils zugeführten bzw. von diesen abgegebenen Leistung fort. Der vierte Verfahrensschritt VS4 kann beispielsweise nach einer jeweiligen Bestimmung der Leistung durch die Steuereinrichtung durchlaufen werden, alternativ aber auch periodisch nach einer jeweiligen vorgegebenen Mehrzahl Bestimmungen bzw. nach einem jeweiligen vorgegebenen Zeitraum. Sofern der Ziel-Streckenpunkt jedoch erreicht bzw. passiert wurde ("ja"), wird das Verfahren mit dem fünften Verfahrensschritt VS5 fortgesetzt.

In dem fünften Verfahrensschritt VS5 bestimmt die Steuereinrichtung eine jeweilige Summe der Energie, die den vier Fahrmotoren über die definierte Strecke jeweils zugeführt sowie gegebenenfalls von diesen abgegeben wurde. Die Summenbildung muss dabei jedoch nicht zwingend als ein gesonderter Verfahrensschritt nach Erreichen des Ziel-Streckenpunktes erfolgen, sondern kann beispielsweise auch kontinuierlich oder periodisch nach einem jeweiligen Bestimmen des Betrags der Leistung erfolgen, sodass die jeweilige Summe der Energie der Antriebsstränge nach Durchfahren der definierten Strecke unmittelbar verfügbar ist.

In einem sechsten Verfahrensschritt VS6 definiert die Steuereinrichtung einen Energie-Schwellwert, mit dem sie die jeweils bestimmte Energie der vier Fahrmotoren in einem nachfolgenden siebten Verfahrensschritt VS7 vergleicht. Für die Definition des Energie-Schwellwertes bildet die Steuereinrichtung beispielsweise eine Summe der bestimmten Energien der vier Fahrmotoren bzw. Antriebsstränge und dividiert diese anschließend durch die Anzahl Fahrmotoren. Hieraus ergibt sich ein Wert für eine durchschnittliche, den Fahrmotoren über die Strecke zugeführte und gegebenenfalls von diesen abgegebenen Energie. Aus diesem Wert leitet die Steuereinrichtung den Energie-Schwellwertes ab. Der Energie-Schwellwert sollte dabei derart definiert werden, dass eine sichere Beurteilung des jeweiligen Zustands der Antriebsstränge aus dem Vergleich möglich ist, welche einerseits hinreichend schnell ableitbar ist, andererseits jedoch die Wahrscheinlichkeit von Fehlalarmen nicht nachteilig erhöht. Insbesondere kann der Energie-Schwellwert abhängig von der Anwendung definiert werden. Beispielsweise wird der Energie-Schwellwert mit einem Wert definiert, der fünfzig Prozent unterhalb des berechneten durchschnittlichen Energiewertes liegt. Dieser Wert kann beispielsweise auch als ein unterer Energie-Schwellwert und ein weiterer Wert, der entsprechend beispielsweise fünfzig Prozent oberhalb des berechneten durchschnittlichen Energiewertes liegt, als ein oberer Energie-Schwellwert definiert werden.

In dem siebten Verfahrensschritt VS7 wird die bestimmte jeweilige Energie der vier Fahrmotoren jeweils mit dem Energie-Schwellwert verglichen. Wird bei diesem Vergleich ermittelt, dass die bestimmte Energie eines Antriebsstrangs unterhalb des unteren Energie-Schwellwertes oder oberhalb des oberen Energie-Schwellwertes liegt ("ja"), so wird das Verfahren mit dem nachfolgenden achten Verfahrensschritt VS8 fortgesetzt. Wird hingegen festgestellt, dass die Energie keines der vier Antriebsstränge den unteren Energie-Schwellwert unterschreitet oder den oberen Energie-Schwellwert überschreitet ("nein"), so kann daraus abgeleitet werden, dass keiner der Antriebsstränge einen möglichen Schaden, beispielsweise einen Bruch der Kupplung, aufweist. Entsprechend kann in gleicher Weise hieraus abgeleitet werden, dass die indirekt erfassten Drehzahlen der Radsätze der Antriebsstränge mit einer großen Wahrscheinlichkeit den tatsächlichen Drehzahlen entsprechend und von weiteren Regelungs- und Steuerfunktionen des Antriebssystems sowie weiteren Systemen des Triebzugs genutzt werden können. Das Verfahren endet entsprechend in einem neunten Verfahrensschritt VS9.

In dem achten Verfahrensschritt VS8 werden das Ergebnis des Vergleichs des siebten Verfahrensschritts VS7 von der Steuereinrichtung ausgewertet und, sofern erforderlich, weitere Maßnahmen ergriffen. So kann als Maßnahme des durch den Vergleich festgestellten möglichen Schadens eines der Antriebsstränge beispielsweise eine Information über den ermittelten Zustand des betroffenen Antriebsstrangs an weitere Steuer- und Regeleinrichtungen des Triebzugs gesendet werden, um diesen zu signalisieren, dass die bereitgestellte Information über die Drehzahl des betroffenen Radsatzes mit einer größeren Wahrscheinlichkeit nicht korrekt ist. Auch kann als weitere Maßnahme dem Fahrzeugführer beispielsweise eine Störungsmeldung angezeigt werden, damit dieser weitere erforderliche Schritte einleiten kann. Insbesondere im Fall eines möglichen Bruchs einer Kupplung sollte die Geschwindigkeit des Triebzugs zumindest verringert werden, um Folgeschäden an weiteren Komponenten des Antriebssystems zu vermeiden.

Insbesondere bei einer kontinuierlichen Bestimmung der Summe der jeweils den Fahrmotoren zugeführten bzw. von diesen abgegebenen Energie in dem fünften Verfahrensschritt VS5 können der sechste VS6 und siebte Verfahrensschritt VS7 auch bereits vor Erreichen des Ziel-Streckenpunktes durchgeführt werden. Entsprechend kann der vierte Verfahrensschritt VS4 beispielsweise eine Unterschleife enthalten, gemäß der beispielsweise periodisch die nachfolgenden Verfahrensschritte VS5 bis VS9 durchlaufen werden. Vorteilhaft kann hierdurch gegebenenfalls bereits während des Fahrbetriebs des Triebzugs ein möglicher Schaden an einem der Antriebsstränge erkannt werden, und bereits zu diesem Zeitpunkt, sofern erforderlich, Maßnahmen zum Schutz des Antriebssystems ergriffen werden.

Nach Ergreifen von Maßnahmen bzw. Erkennen, dass keine Maßnahmen erforderlich sind, endet das erfindungsgemäße Verfahren wiederum in dem neunten Verfahrensschritt VS9.

Um die Wahrscheinlichkeit eines fehlerhaften Ergebnisses zu verringern, welche entsprechend den genannten möglichen Maßnahmen zu einer Einschränkung des normalen Betriebs des Schienenfahrzeugs führen würden, können die beschriebenen Verfahrensschritte wiederholt durchgeführt werden und erst nach Bestätigung des möglichen Vorliegens eines Schadens in einem der Antriebsstränge die genannten Maßnahmen durchgeführt werden.

Alternativ oder ergänzend kann zur Bestätigung des Vorliegens eines Schadens während des nächsten Stillstands des Triebzugs, beispielsweise während sich der Triebzug am Ort der Ziel-Haltestelle HZ befindet, eine weitere Prüfung der Antriebsstränge durchgeführt werden. Diese kann beispielsweise als Teil eines weiteren Verfahrensschritts, welcher zwischen dem siebten VS7 und achten Verfahrensschritt VS8 angeordnet ist, verwirklicht werden.

Hierzu werden beispielsweise die verfügbaren mechanischen Bremsen des Triebzugs angelegt, sodass eine Bewegung des Fahrzeugs nicht möglich und damit die Sicherheit von Fahrgästen während des nachfolgenden Schrittes nicht gefährdet ist. Anschließend werden die Fahrmotoren der betrachteten Antriebsstränge, gemäß vorstehend beschriebenem Beispiel die von dem gemeinsamen Wechselrichter gespeisten vier Antriebsstränge, nacheinander durch den Wechselrichter derart angesteuert, dass sie ein bestimmtes, begrenztes Drehmoment erzeugen. Führt diese Ansteuerung dazu, dass sich der angesteuerte Fahrmotor mit einer bestimmten Drehzahl dreht, welches durch einen Drehzahlsensor an dessen Antriebswelle erfasst wird, so kann daraus geschlossen werden, dass eine Trennung in dem betrachteten Antriebsstrang vorliegt.

Eine weitere alternative Prüfung, wiederum als Teil eines weiteren, zwischen dem siebten VS7 und achten VS8 Verfahrensschritt, angeordneten Verfahrensschritts, kann während des Fahrbetriebs mittels einer gezielten Änderung der Drehzahl einzelner Fahrmotoren durchgeführt werden. Ist eine derartige Drehzahländerung für einen der Fahrmotoren möglich, so dann hieraus wiederum auf eine Trennung in dem Antriebsstrang dieses Fahrmotors geschlossen werden. In gleicher Weise kann beispielsweise ein jeweiliges Sollmoment der Fahrmotoren während des Fahrbetriebs mittels einer Überlagerung der Signale des Wechselrichters mit einem Störsignal geändert werden. Dieses Störsignal ist beispielsweise derart gestaltet, dass die Summe aus Sollmoment und Störmoment bei einem intakten Antriebsstrang zu keiner Änderung der Drehzahl des Fahrmotors führt. Existiert jedoch eine Trennung in dem mit dem Störsignal angesteuerten Antriebsstrang, so führt dies zu einer erfassbaren Änderung der Drehzahl des Fahrmotors, welche durch weitere Motorregelungen nicht unterdrückt wird.

## Patentansprüche

1. Verfahren zum Überwachen eines Antriebssystems eines spurgebundenen Fahrzeugs, wobei
das Antriebssystem zumindest zwei Antriebsstränge (AS1-AS4) mit jeweils einem elektrischen Fahrmotor (M1-M4) und einem Radsatz (RS1-RS4), sowie eine Steuereinrichtung (ST) aufweist,
**gekennzeichnet durch** die Schritte:
Bestimmen einer jeweiligen über ein Zeitintervall (zi1-zi3) oder eine Strecke (str) den Fahrmotoren zugeführten und/oder von den Fahrmotoren abgegebenen elektrischen Energie, Vergleichen der bestimmten jeweiligen elektrischen Energie der Fahrmotoren mit einem Energie-Schwellwert, und
Ableiten eines Zustands des jeweiligen Antriebsstrangs aus dem Vergleich, und
Prüfen des abgeleiteten Zustands des jeweiligen Antriebsstrangs (AS1-AS4) nachfolgend während des Fahrbetriebs **dadurch, dass** der jeweilige Fahrmotor (M1-M4) derart angesteuert wird, dass sich die Drehzahl einer Welle des Fahrmotors (nₘ₁-nₘ₄) ändern sollte, und Ermitteln der Drehzahl der Welle (nₘ₁-nₘ₄).

2. Verfahren nach dem vorstehenden Anspruch, wobei für das Bestimmen der jeweiligen elektrischen Energie der Fahrmotoren (M1-M4) die den Fahrmotoren (M1-M4) jeweils zugeführte und/oder von den Fahrmotoren (M1-M4) abgegebene elektrische Leistung kontinuierlich oder periodisch über das Zeitintervall (zi1-zi3) oder die Strecke (str) bestimmt wird.

3. Verfahren nach einem vorstehenden Anspruch, wobei das Zeitintervall (zi1-zi3) oder die Strecke (str) derart bemessen wird, dass in diesem oder dieser zumindest ein Fahr- und/oder Bremsbetrieb des Fahrzeugs enthalten ist.

4. Verfahren nach einem vorstehenden Anspruch, wobei für das Bestimmen der den Fahrmotoren (M1-M4) jeweils zugeführten elektrischen Energie zumindest ein Teil des Zeitintervalls (zi1-zi3) oder der Strecke (str) berücksichtigt wird, in dem sich das Fahrzeug während des Fahrbetriebs mit einer Geschwindigkeit (v) bewegt, die einen vorgegebenen Geschwindigkeits-Schwellwert (vsw) überschreitet.

5. Verfahren nach einem vorstehenden Anspruch, wobei der Energie-Schwellwert aus einem Mittelwert der bestimmten Energien der Fahrmotoren (M1-M4) abgeleitet wird.

6. Verfahren nach einem vorstehenden Anspruch, wobei eine Drehzahl des Radsatzes (RS1-RS4) des jeweiligen Antriebsstrangs (AS1-AS4) aus einer Drehzahl einer Welle des Fahrmotors (nₘ₁-nₘ₄), einer Kupplung (nₖ₁-nₖ₄) und/oder eines Getriebes (n_{g1}-n_{g4}) abgeleitet wird.

7. Verfahren nach dem vorstehenden Anspruch, wobei aus dem abgeleiteten Zustand des jeweiligen Antriebsstrangs (AS1-AS4) auf eine Plausibilität der abgeleiteten Drehzahl des Radsatzes (RS1-RS4) des Antriebsstrangs (AS1-AS4) geschlossen wird.

8. Verfahren nach einem vorstehenden Anspruch, wobei der abgeleitete Zustand des jeweiligen Antriebsstrangs (AS1-AS4) nachfolgend während eines Stillstands des Fahrzeugs dadurch geprüft wird, dass der jeweilige Fahrmotor (M1-M4) während eines Zeitintervalls des Stillstands derart angesteuert wird, dass er ein Moment erzeugt, und eine Drehzahl einer Welle des Fahrmotors (nₘ₁-nₘ₄) ermittelt wird.

9. Anordnung zur Überwachung eines Antriebssystems eines spurgebundenen Fahrzeugs, wobei
das Antriebssystem zumindest zwei Antriebsstränge (AS1-AS4) mit jeweils einem elektrischen Fahrmotor (M1-M4) und einem Radsatz (RS1-RS4), sowie eine Steuereinrichtung (ST) aufweist, und
**dadurch gekennzeichnet, dass**
die Steuereinrichtung (ST) dazu ausgestaltet ist, eine jeweilige über ein Zeitintervall (zi1-zi3) oder eine Strecke (str) den Fahrmotoren (M1-M4) zugeführte und/oder von den Fahrmotoren (M1-M4) abgegebene elektrische Energie zu bestimmen, die bestimmte jeweilige elektrische Energie der Fahrmotoren (M1-M4) mit einem Energie-Schwellwert zu vergleichen, und aus dem Vergleich einen Zustand des jeweiligen Antriebsstrangs (AS1-AS4) abzuleiten, und
die Steuereinrichtung (ST) ferner dazu ausgestaltet ist, den abgeleiteten Zustand des jeweiligen Antriebsstrangs (AS1-AS4) nachfolgend während des Fahrbetriebs dadurch zu prüfen, dass der jeweilige Fahrmotor (M1-M4) derart angesteuert wird, dass sich die Drehzahl einer Welle des Fahrmotors (nₘ₁-nₘ₄) ändern sollte, und die Drehzahl der Welle (nₘ₁-nₘ₄) ermittelt wird.

10. Anordnung nach Anspruch 9, wobei
das Fahrzeug als ein Schienenfahrzeug, insbesondere als ein Triebzug (TZ), ausgestaltet ist.

11. Anordnung nach Anspruch 9 oder 10, wobei
in jedem Antriebsstrang (AS1-AS4) zwischen dem Antriebsmotor (M1-M4) und dem Radsatz (RS1-RS4) eine Kupplung (K1-K4) und/oder ein Getriebe (G1-G4) angeordnet ist.

12. Anordnung nach Anspruch 11, wobei
in jedem Antriebsstrang (AS1-AS4) zumindest ein Drehzahlsensor an einer Welle des Fahrmotors(M1-M4), einer Welle der Kupplung (K1-K4) und/oder einer Welle des Getriebes (G1-G4) angeordnet ist.

## Claims

1. Method for monitoring a drive system of a rail-bound vehicle, wherein
the drive system has at least two drive trains (AS1-AS4) each with an electric traction motor (M1-M4) and a wheel set (RS1-RS4), as well as a control facility (ST),
**characterised by** the steps:
determining a respective electrical energy supplied to the traction motors over a time interval (zi1-zi3) or a route (str) and/or delivered by the traction motors,
comparing the determined respective electrical energy of the traction motors with an energy threshold value, and
deriving a state of the respective drive train from the comparison, and
checking the derived state of the respective drive train (AS1-AS4) subsequently during the traction operation, in that the respective traction motor (M1-M4) is actuated in a manner in which the rotational speed of a shaft of the traction motor (nₘ₁-nₘ₄) were intended to change, and ascertaining the rotational speed of the shaft (nₘ₁-nₘ₄).

2. Method according to the preceding claim, wherein
for the determining of the respective electrical energy of the traction motors (M1-M4), the electrical output supplied to the traction motors (M1-M4) in each case and/or delivered by the traction motors (M1-M4) is determined continuously or periodically over the time interval (zi1-zi3) or the route (str) .

3. Method according to a preceding claim, wherein
the time interval (zi1-zi3) or the route (str) are dimensioned such that at least one traction and/or braking operation of the vehicle is contained therein.

4. Method according to a preceding claim, wherein
for the determining of the electrical energy supplied to the traction motors (M1-M4) in each case, at least a part of the time interval (zi1-zi3) or the route (str) is taken into consideration, in which the vehicle moves with a velocity (v) that exceeds a predefined velocity threshold value (vsw) during the traction operation.

5. Method according to a preceding claim, wherein
the energy threshold value is derived from an average value of the determined energies of the traction motors (M1-M4).

6. Method according to a preceding claim, wherein
a rotational speed of the wheel set (RS1-RS4) of the respective drive train (AS1-AS4) is derived from a rotational speed of a shaft of the traction motor (nₘ₁-nₘ₄), a coupling (nₖ₁-nₖ₄) and/or a gear unit (n_{g1}-n_{g4}).

7. Method according to the preceding claim, wherein
a plausibility of the derived rotational speed of the wheel set (RS1-RS4) of the drive train (AS1-AS4) is inferred from the derived state of the respective drive train (AS1-AS4).

8. Method according to a preceding claim, wherein
the derived state of the respective drive train (AS1-AS4) is subsequently checked while the vehicle is at a standstill in that the respective traction motor (M1-MK4) is actuated during a time interval of the standstill in such a manner that it generates a torque, and a rotational speed of a shaft of the traction motor (nₘ₁-nₘ₄) is ascertained.

9. Arrangement for monitoring a drive system of a rail-bound vehicle, wherein
the drive system has at least two drive trains (AS1-AS4) each with an electric traction motor (M1-M4) and a wheel set (RS1-RS4), as well as a control facility (ST), and
**characterised in that**
the control facility (ST) is embodied to determine a respective electrical energy supplied to the traction motors (M1-M4) over a time interval (zi1-zi3) or a route (str) and/or delivered by the traction motors (M1-M4), to compare the determined respective electrical energy of the traction motors (M1-M4) with an energy threshold value, and to derive a state of the respective drive train (AS1-AS4) from the comparison, and the control facility (ST) is further embodied to check the derived state of the respective drive train (AS1-AS4) subsequently during the traction operation, **in that** the respective traction motor (M1-M4) is actuated in a manner in which the rotational speed of a shaft of the traction motor (nₘ₁-nₘ₄) were intended to change, and the rotational speed of the shaft (nₘ₁-nₘ₄) is ascertained.

10. Arrangement according to claim 9, wherein
the vehicle is embodied as a rail vehicle, in particular as a multiple unit (TZ).

11. Arrangement according to claim 9 or 10, wherein
in each drive train (AS1-AS4), a coupling (K1-K4) and/or a gear unit (G1-G4) is arranged between the traction motor (M1-M4) and the wheel set (RS1-RS4).

12. Arrangement according to claim 11, wherein
in each drive train (AS1-AS4), at least one rotational speed sensor is arranged on a shaft of the traction motor (M1-M4), a shaft of the coupling (K1-K4) and/or a shaft of the gear unit (G1-G4).

## Revendications

1. Procédé de contrôle d'un système d'entraînement d'un véhicule guidé sur rail, dans lequel
le système d'entraînement a au moins deux branches (AS1 à AS4) d'entraînement ayant chacune un moteur (Ml à M4) de traction électrique et un essieu (RS1 à RS4), ainsi qu'un dispositif (ST) de commande,
**caractérisé par** les stades :
détermination d'une énergie électrique respective apportée aux moteurs de traction et/ou cédée par les moteurs de traction sur un intervalle (zil à zi3) de temps ou sur une section (str),
comparaison de l'énergie électrique respective déterminée des moteurs de traction avec une valeur de seuil d'énergie, et
déduction d'un état de la branche d'entraînement respective à partir de la comparaison, et
contrôle de l'état déduit de la branche (AS1 à AS4) d'entraînement respective pendant le fonctionnement en circulation suivant, en commandant le moteur (Ml à M4) respectif de traction, de manière à ce que la vitesse de rotation d'un arbre du moteur (nₘ₁ à nₘ₄) de traction devrait se modifier, et détermination de la vitesse de rotation de l'arbre (nₘ₁ à nₘ₄).

2. Procédé suivant la revendication précédente, dans lequel, pour la détermination de l'énergie électrique respective des moteurs (Ml à M4) de traction, on détermine, continuellement ou périodiquement sur l'intervalle (zil à zi3) de temps ou sur la section (str), la puissance électrique respectivement apportée aux moteurs (Ml à M4) de traction ou cédée par les moteurs (Ml à M4) de traction.

3. Procédé suivant une revendication précédente, dans lequel on proportionne l'intervalle (zil à zi3) de temps ou la section (str), de manière à ce qu'y soit contenu au moins un fonctionnement en circulation et/ou en freinage du véhicule.

4. Procédé suivant une revendication précédente, dans lequel, pour la détermination de l'énergie électrique apportée respectivement aux moteurs (Ml à M4) de traction, on prend en compte au moins une partie de l'intervalle (zil à zi3) de temps ou de la section (str), dans lequel le véhicule se déplace pendant le fonctionnement en circulation à une vitesse (v), qui dépasse une valeur (vsw) de seuil de vitesse donnée à l'avance.

5. Procédé suivant une revendication précédente, dans lequel on déduit la valeur de seuil de l'énergie d'une valeur moyenne des énergies déterminées des moteurs (Ml à M4) de traction.

6. Procédé suivant une revendication précédente, dans lequel on déduit une vitesse de rotation de l'essieu (RS1 à RS4) de la branche (AS1 à AS4) d'entraînement respective d'une vitesse de rotation d'un arbre du moteur (nₘ₁ à nₘ₄) de traction, d'un accouplement (nₖ₁ à nₖ₄) et/ou d'une transmission (n_{g1} à n_{g4}).

7. Procédé suivant la revendication précédente, dans lequel, à partir de l'état déduit de la branche (AS1 à AS4) d'entraînement respective, on tire une conclusion sur la vraisemblance de la vitesse de rotation déduite de l'essieu (RS1 à RS4) de la branche (AS1 à AS4) d'entraînement.

8. Procédé suivant une revendication précédente, dans lequel on contrôle l'état déduit de la branche (AS1 à AS4) d'entraînement respective, pendant consécutivement un arrêt du véhicule, en commandant le moteur (Ml à M4) de traction respectif pendant un intervalle de temps de l'arrêt, de manière à produire un couple, et on détermine une vitesse de rotation d'un arbre du moteur (nₘ₁ à nₘ₄) de traction.

9. Dispositif de contrôle d'un système d'entraînement d'un véhicule guidé sur rail, dans lequel
le système d'entraînement a au moins deux branches (AS1 à AS4) d'entraînement ayant chacune un moteur (Ml à M4) de traction électrique et un essieu (RS1 à RS4), ainsi qu'un dispositif (ST) de commande, et
**caractérisé en ce que**
le dispositif (ST) de commande est conformé pour déterminer une énergie électrique respective apportée aux moteurs (Ml à M4) de traction et/ou cédée par les moteurs (Ml à M4) de traction sur un intervalle (zil à zi3) de temps ou sur une section (str), pour comparer l'énergie électrique respective déterminée des moteurs (Ml à M4) de traction à une valeur de seuil d'énergie, et pour déduire de la comparaison un état de la branche (AS1 à AS4) d'entraînement respective, et le dispositif (ST) de commande est conformé en outre pour contrôler l'état déduit de la branche (AS1 à AS4) d'entraînement respective, pendant consécutivement le fonctionnement en circulation, en commandant le moteur (Ml à M4) de traction respectif, de manière à ce que la vitesse de rotation d'un arbre du moteur (nₘ₁ à nₘ₄) de traction devrait se modifier, et on détermine la vitesse de rotation de l'arbre (nₘ₁ à nₘ₄).

10. Dispositif suivant la revendication 9, dans lequel le véhicule est conformé en véhicule ferroviaire, notamment sous la forme d'une rame (TZ) automotrice.

11. Dispositif suivant la revendication 9 ou 10, dans lequel un accouplement (K1 à K4) et/ou une transmission (G1 à G4) est disposée dans chaque branche (AS1 à AS4) d'entraînement, entre le moteur (Ml à M4) d'entraînement et l'essieu (RS1 à RS4).

12. Dispositif suivant la revendication 11, dans lequel dans chaque branche (AS1 à AS4) d'entraînement au moins un capteur de vitesse de rotation est monté sur un arbre du moteur (Ml à M4) de traction et/ou sur un arbre de l'accouplement (K1 à K4) et/ou sur un arbre de la transmission (G1 à G4).
